# EUROPEAN PATENT APPLICATION

(11) **EP 2 003 743 A2**
(43) Date of publication of application: **17.12.2008**
(21) Application number: 08010117.3
(22) Date of filing: 03.06.2008
(51) Int. Cl.: H01S 3/00

(54) **Startup method for gas laser unit and gas laser unit having startup function**

(30) Priority: 11.06.2007 JP 2007153979
(71) Applicant: Fanuc Ltd, Yamanashi 401-0597 (JP)
(72) Inventor: Ando, Minoru, Minamitsuru-gun Yamanashi 401-0597 (JP); Ikemoto, Hajime, Minamitsuru-gun Yamanashi 401-0597 (JP)
(74) Representative: Thum, Bernhard

(57) **Abstract**

A startup method capable of easily and inexpensively activating a laser oscillator by limiting an output current of a high-frequency power supply, without using a particular element or a complicated system, even when the laser oscillator is activated in a low-temperature environment, and a gas laser unit having such a function. According to the normal pressure control, the laser gas is gradually increased from pressure p1 to pressure p2. However, in the invention, when DC current reaches a certain threshold at time t3, a feedback control of the laser gas is executed after time t3 such that the DC current does not exceed the threshold. In this case, the laser gas pressure is controlled so as to increase to pressure p2' which is smaller than pressure p2.

## Description

### RELATED APPLICATIONS

The present application claims priority from Japanese Patent Application No. 2007-153979, filed on June 11, 2007, the entire contents of which are fully incorporated herein by reference.

### BACKGROUND OF THE INVENTION

### 1. Field of the Invention

The present invention relates to a startup method for a gas laser unit using a gas as an excitation medium, in particular, a startup method for safely activating the gas laser unit in a low-temperature environment. The invention also relates to a gas laser unit having such a startup function.

### 2. Description of the Related Art

Generally, in a discharge-excited gas laser unit having a discharge tube in which a laser excitation gas is circulated, the temperature of laser gas, an oscillator, and the inside of a case containing the oscillator and/or cooling water, etc., at the time of startup thereof, is lower than that in the thermal equilibrium state thereof. Therefore, until a certain period of time has passed from the startup of the laser unit, a discharge load is in a transient state. At this point, when the laser oscillator is activated in a low-temperature environment, a matching between the discharge load and a laser power supply unit for supplying high-frequency power to the oscillator is changed, resulting in an increase in DC current of the laser power supply. Further, if the laser oscillator is activated in a very low-temperature environment, the DC current may rise to an alarm level, and then the oscillator may be stopped by an overcurrent alarm.

In the prior art, when the discharge load is in the transient state, a method for limiting an output current of a high-frequency power supply unit and automatically optimizing a matching may be used, in which a constant (or a condenser and/or an inductor) of a matching circuit is varied so as to correspond to the state of the load at that point in time. For example, Japanese Unexamined Patent Publication (Kokai) No. 6-326543 discloses a method for optimizing a matching between a high-frequency power supply unit and a load of a discharge tube, in which a current and a voltage of a high frequency power source and a phase difference between the current and the voltage are detected, an impedance and the phase are calculated, and then a variable matching condenser in a matching box is controlled.

On the other hand, Japanese Unexamined Patent Publication (Kokai) No. 2006-166412 discloses a more complicated technique for controlling a motor, in which more parameters for controlling a variable matching condenser such as used in Japanese Unexamined Patent Publication (Kokai) No. 6-326543, are used.

By using the technique as described in Japanese Unexamined Patent Publication (Kokai) No. 6-326543 or Japanese Unexamined Patent Publication (Kokai) No. 2006-166412, a matching of the transient state at the time of startup of the laser oscillator may be optimized. However, in the method for changing the constant of the matching circuit so as to correspond to the discharge load at that point in time, it is necessary to control a driving system of the motor in order to change the constant of the matching circuit. Therefore, if the technique as described in Japanese Unexamined Patent Publication (Kokai) No. 6-326543 or Japanese Unexamined Patent Publication (Kokai) No. 2006-166412 is used, a phase detecting device, a motor for varying the distance between electrodes of a variable condenser or an effective area of the condenser, and a control device for the device or the motor are necessary. As a result, the entire system may be costly and complicated.

### SUMMARY OF THE INVENTION

An object of the present invention is to provide a startup method capable of easily and inexpensively activating a laser oscillator by limiting an output current of a high-frequency power supply unit, without using a particular element or a complicated system, even when the laser oscillator is activated in a low-temperature environment. Another object of the invention is to provide a gas laser unit having such a function.

Accordingly, one aspect of the invention provides a startup method for a discharge excitation gas laser unit capable of generating a laser by circulating a laser gas in a laser discharge tube and generating high-frequency discharge of the laser gas, the method comprising the steps of: previously storing an output current characteristic, as a normal current characteristic, of a DC power supply part of a laser power supply unit of the gas laser unit when the gas laser unit is normally activated; detecting an output current of the DC power supply part of the laser power supply unit while the gas laser unit is activated; and controlling the pressure of the laser gas within the laser discharge tube such that the detected output current of the DC power supply part does not exceed a threshold which is determined based on the normal current characteristic.

The step of controlling the pressure of the laser gas may comprise reducing the pressure of the laser gas within the laser discharge tube when the detected output current of the DC power supply part reaches the threshold.

Another aspect of the invention provides a discharge excitation gas laser unit capable of generating a laser by circulating a laser gas in a laser discharge tube and generating high-frequency discharge of the laser gas, the gas laser unit comprising: a storing part for previously storing an output current characteristic, as a normal output current characteristic, of a DC power supply part of a laser power supply unit of the gas laser unit when the gas laser unit is normally activated; a detecting part for detecting an output current of the DC power supply part of the laser power supply unit while the gas laser unit is activated; and a pressure controlling part for controlling the pressure of the laser gas within the laser discharge tube such that the output current of the DC power supply part detected by the detecting part does not exceed a threshold which is determined based on the normal current characteristic stored in the storing part.

The pressure controlling unit may reduce the pressure of the laser gas within the laser discharge tube when the detected output current of the DC power supply part reaches the threshold.

The gas laser unit may comprise a matching unit having a fixed-capacity condenser.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 shows a basic configuration of a gas laser unit according to the present invention; and
Fig. 2 shows two graphs sharing the same time axis, the upper and lower graphs indicating the changes of a DC current and a laser gas pressure at startup of the laser unit of Fig. 1, respectively.

### DETAILED DESCRIPTIONS

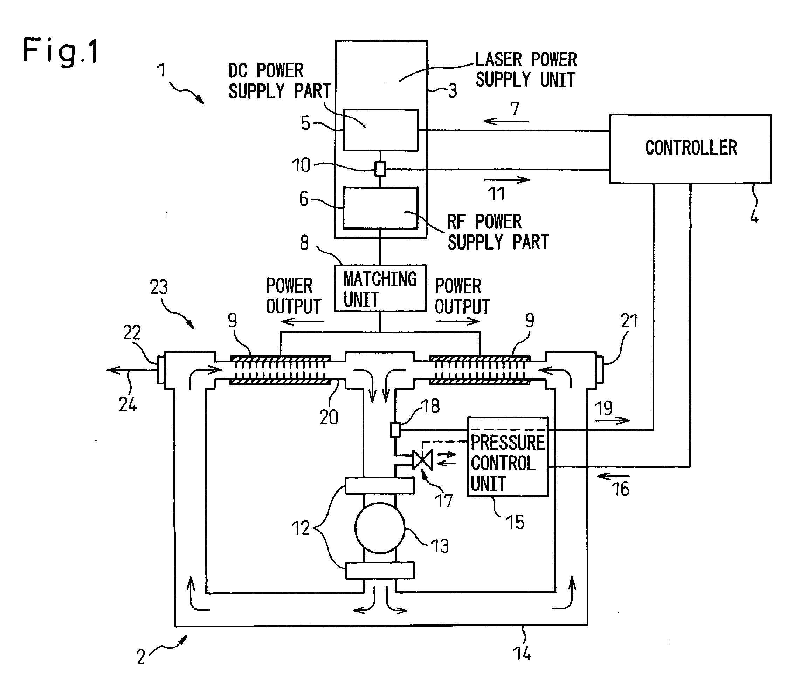

Fig. 1 shows an example of the configuration of a gas laser unit 1 to which a startup method of the invention may be applied. Gas laser unit 1 includes a laser oscillator 2, a laser power supply unit 3 for supplying power to laser oscillator 2, and a controller 4 containing a CPU (not shown) for controlling the general operation of laser oscillator 2 and laser power supply unit 3.

Laser power supply unit 3 is a high-frequency power supply including a DC power supply part 5 and a RF power supply part 6. An output by DC power supply part 5 is controlled by an output command 7 outputted by controller 4, and is converted to a high-frequency power by means of RF power supply part 6. Then, the high-frequency power is supplied to electrodes 9 of laser oscillator 2 via a matching unit 8. Laser power supply unit 3 has a detecting part 10 for detecting the output current of DC power supply part 5. A detecting result by detecting part 10 is inputted to controller 4 as an output current signal 11.

A laser gas that is laser medium is filled between electrodes 9, and is circulated with a high speed in a gas circulation circuit 14 of laser oscillator 2 by means of an air blower such as a turbo blower 13, while being cooled by a heat exchanger 12. A pressure control part or a pressure control unit 15 controls the pressure of the laser gas based on a pressure control signal 16 outputted from controller 4. Concretely, pressure control unit 15 controls an air supply/exhaust device 17 arranged in gas circulation circuit 14 such that the supply or exhaust volume of the laser gas of gas circulation circuit 14 is adjusted corresponding to pressure control signal 16. A pressure sensor 18 is arranged in gas circulation circuit 14 for measuring or monitoring the pressure of the laser gas. A pressure detection signal 19 is inputted to controller 4 via pressure control unit 15.

Laser oscillator 2 has a discharge tube 20 with electrodes 9. A total reflection mirror 21 is positioned at one end of discharge tube 20, and a semitransparent mirror 22 is positioned at the other end of discharge tube 20. Discharge tube 20 and mirrors 21, 22 cooperatively constitute a laser resonator 23. When high-frequency voltage is supplied to electrodes 9 from laser power supply unit 3, the laser gas is excited by discharging and light is generated at resonator 23. The generated light is repeatedly reflected between mirrors 21 and 22 and amplified by induced emission. A part of the amplified light is outputted from semitransparent mirror 22 as a laser beam 24 and used for laser cutting or the like.

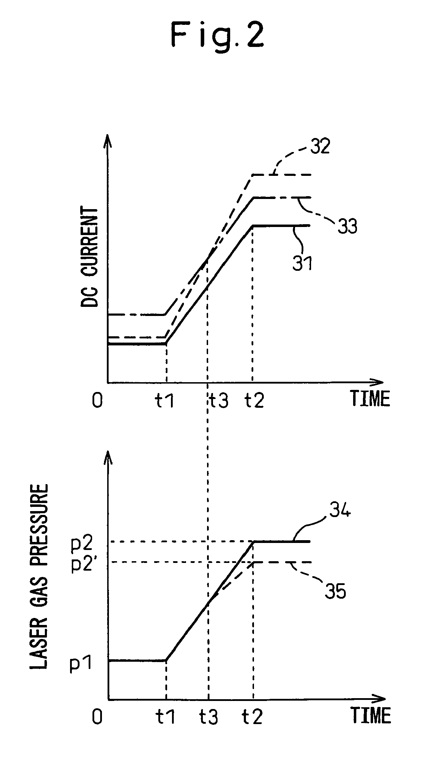

Next, the startup method for laser unit 1 will be explained. Fig. 2 includes upper and lower graphs sharing the same time axis, the upper graph indicating the changes of an output current of the DC power supply part and the lower graph indicating the change of the pressure of the laser gas in the gas circulation circuit at startup of laser unit 1. In the two graphs, solid lines 31 and 34 indicate the changes of the DC current and the laser gas pressure, respectively, when the startup of the laser unit is normally executed from time t1 to t2 (about 20-30 seconds) in a normal temperature environment. In other words, the solid lines indicate the normal current characteristic and the normal pressure characteristic, respectively. In addition, each of graphs 31 and 34 may be defined by specified previous normal data or an average of some previous normal data.

When the laser unit is activated in a low-temperature environment, as shown by a dashed line 32, for example, a discharge load at the time of the startup is greater than that in a normal temperature environment. In this case, the DC current is deviated from the normal DC current (graph 31), resulting in that the laser oscillator may be forcibly stopped by an overcurrent alarm or the like. Therefore, as shown by a chain line 33, it is effective to control the gas pressure as described below, when the DC current exceeds a threshold predetermined based on the normal data (at time t3 in the upper graph of Fig. 2). The threshold is preferably set to a value which is somewhat larger than the normal value. For example, the threshold may be determined by adding a constant margin to the normal value or multiplying the normal by a constant ratio (for example, 1.1 to 1.3). In addition, the threshold predetermined based on the normal current characteristic data may be previously stored in a suitable storing part. In the embodiment, the threshold may be stored in controller 4.

When the DC current reaches the threshold at time t3, the laser gas pressure in the gas circulation circuit is automatically controlled such that the laser gas pressure is smaller than the normal state (graph 34), as shown by a dashed line 35 in the lower graph of Fig. 2, in order not to generate the overcurrent alarm. Concretely, according to the normal pressure control, the laser gas is gradually increased from pressure p1 before the startup (for example, 2-4 kPa) to pressure p2 (for example, 10-15 kPa). However, in the invention, after time t3, a feedback control of the laser gas pressure is executed such that the DC current (graph 32) does not exceed the threshold (graph 33). In this case, the laser gas pressure is controlled so as to increase to pressure p2' which is smaller than pressure p2, as shown by a graph 35 having a gradient lower than that of graph 34. Generally, since the discharge load of the discharge tube is lowered as the laser gas pressure is decreased, whereby the DC current may be reduced. Therefore, by executing the above feedback control after time t3, the laser oscillator may be safely activated without stopping the oscillator due to the overcurrent alarm or the like.

Generally, output command 7 sent to laser power supply unit 3 from controller 4 is for merely commanding a laser output. Therefore, in a laser unit of the prior art, a complicated matching box is necessary for optimizing a matching between the output current and the discharge load in case that the DC current becomes overcurrent in the transient state. On the other hand, in the invention, the discharge load may be automatically reduced by controlling the laser gas pressure, whereby the DC current may be prevented from being the overcurrent. Therefore, matching unit 8 as shown in Fig. 1 does not need to have a complicate element such as a variable condenser and a motor therefore. For example, matching unit 8 may have a simple fixed-capacity condenser. According to the invention, a laser unit having a function for avoiding the overcurrent may be constituted inexpensively.

In the example of Fig. 2, the DC current is used as a current to be monitored. Instead, a high-frequency current outputted from RF power supply part 6 may be used in the same way. However, DC current is more preferable, since DC current is easily monitored and the change thereof at the startup is clear.

According to the present invention, even when a laser unit is activated in a low-temperature environment, a DC current of a laser power supply unit is automatically controlled by a pressure control of laser gas. Therefore, a laser oscillator may be prevented from being stopped by an overcurrent alarm or the like, whereby the laser oscillator may be safely activated. Further, the detection of the DC current and the pressure control of the laser gas may be executed in an existing system. Therefore, the laser unit does not need to have a special detection device and process for detecting the overcurrent of the DC current, a variable condenser with a motor therefor, and a complicate matching box including a controller. Accordingly, a simple and inexpensive laser unit may be provided.

As a concrete method for controlling the laser gas pressure, the laser gas pressure may be controlled or lowered when the DC current reaches the threshold.

While the invention has been described with reference to specific embodiments chosen for the purpose of illustration, it should be apparent that numerous modifications could be made thereto, by one skilled in the art, without departing from the basic concept and scope of the invention.

## Claims

1. A startup method for a discharge excitation gas laser unit (1) capable of generating a laser by circulating a laser gas in a laser discharge tube (20) and generating high-frequency discharge of the laser gas, the method comprising the steps of:
previously storing an output current characteristic, as a normal current characteristic, of a DC power supply part (5) of a laser power supply unit (3) of the gas laser unit (1) when the gas laser unit (1) is normally activated;
detecting an output current of the DC power supply part (5) of the laser power supply unit (3) while the gas laser unit (1) is activated; and
controlling the pressure of the laser gas within the laser discharge tube (20) such that the detected output current of the DC power supply part (5) does not exceed a threshold which is determined based on the normal current characteristic.

2. The startup method according to claim 1, wherein the step of controlling the pressure of the laser gas comprises reducing the pressure of the laser gas within the laser discharge tube (20) when the detected output current of the DC power supply part (5) reaches the threshold.

3. A discharge excitation gas laser unit (1) capable of generating a laser by circulating a laser gas in a laser discharge tube (20) and generating high-frequency discharge of the laser gas, the gas laser unit (1) comprising:
a storing part (4) for previously storing an output current characteristic, as a normal current characteristic, of a DC power supply part (5) of a laser power supply unit (3) of the gas laser unit (1) when the gas laser unit (1) is normally activated;
a detecting part (10) for detecting an output current of the DC power supply part (5) of the laser power supply unit (3) while the gas laser unit (1) is activated; and
a pressure controlling part (15) for controlling the pressure of the laser gas within the laser discharge tube (20) such that the output current of the DC power supply part (5) detected by the detecting part (10) does not exceed a threshold which is determined based on the normal current characteristic stored in the storing part (4).

4. The gas laser unit according to claim 3, wherein the pressure controlling unit (15) is configured to reduce the pressure of the laser gas within the laser discharge tube (20) when the detected output current of the DC power supply part (5) reaches the threshold.

5. The gas laser unit according to claim 3, wherein the gas laser unit (1) comprises a matching unit (8) having a fixed-capacity condenser.
